# EUROPÄISCHE PATENTSCHRIFT

(11) **EP 0 789 157 B1**
(45) Veröffentlichungstag und Bekanntmachung des Hinweises auf die Patenterteilung: **17.04.2002**
(21) Anmeldenummer: 97100492.4
(22) Anmeldetag: 15.01.1997
(51) Int. Cl.: F16F 9/44

(54) **Längenverstellbare Gasfeder**
Length-adjustable gas spring
Ressort à gaz ajustable en longueur

(30) Priorität: 10.02.1996 DE 19604962
(43) Veröffentlichungstag der Anmeldung: 13.08.1997
(73) Patentinhaber: SUSPA Holding GmbH, 90518 Altdorf (DE)
(72) Erfinder: Wolf, Herbert, 90518 Altdorf (DE); Bauer, Hans-Peter, 90518 Altdorf (DE)
(74) Vertreter: Rau, Manfred, Dr. Dipl.-Ing.

(56) Entgegenhaltungen:
- EP-A- 0 362 038
- DE-A- 4 114 101
- DE-A- 4 236 732
- DE-U- 7 434 101
- FR-A- 2 598 474

## Beschreibung

Die Erfindung betrifft eine längenverstellbare Gasfeder nach dem Oberbegriff des Anspruches 1.

Bei einer derartigen aus der EP 0 564 776 A1 (entsprechend JP Hei-5-64 105) bekannten längenverstellbaren Gasfeder ist die Verstelleinrichtung als hydraulische Verstelleinrichtung ausgestaltet, deren AuslöseEinrichtung mit elastischen Verriegelungs-Zungen versehen ist, die mit der Gasfeder verrastbar sind. Die Verriegelungszungen greifen mit Rastvorsprüngen in eine der Gasfeder zugeordnete Hinterschneidung ein. Diese Lösung ist zwar, was das Einrasten angeht, zufriedenstellend, sie ist vom Fertigungsaufwand her aber relativ aufwendig. Es kommt hinzu, daß die hydraulische Verstelleinrichtung schwer betätigbar ist.

Aus der DE 42 36 732 A1 (entsprechend EP 0 595 357 A2) ist eine Gasfeder mit einer Verstelleinrichtung bekannt, bei der der Seilzug eines Bowdenzuges ortsfest an der Gasfeder festgelegt ist und der das Seil umgebende Schlauch gegen einen Betätigungsstift anliegt.

Aus der DE 41 14 101 A1 ist eine Gasfeder mit einer Verstelleinrichtung bekannt, die einen Bowdenzug aufweist. Hierzu ist am Ende der Kolbenstange ein Betätigungshebel angelenkt, der einen in der hohl ausgebildeten Kolbenstange angeordneten Ventilstift betätigt.

Aus der US-PS 4 793 450 ist eine längenverstellbare Gasfeder bekannt, bei der mittels einer fluidischen Auslöseeinrichtung, die mittels eines Betätigungsbalges betätigbar ist, ein Ventil zwischen zwei Teil-Gehäuseräumen geöffnet bzw. geschlossen werden kann.

Alle bekannten Ausgestaltungen weisen den Nachteil auf, daß die Betätigungskräfte zum Öffnen des Ventils außerordentlich hoch sind.

Der Erfindung liegt daher die Aufgabe zugrunde, eine Gasfeder der gattungsgemäßen Art so auszugestalten, daß sie mit besonders geringem Kraftaufwand betätigbar ist.

Diese Aufgabe wird erfindungsgemäß durch die Merkmale im Kennzeichnungsteil des Anspruches 1 gelöst. Durch die erfindungsgemäßen Maßnahmen wird erreicht, daß nicht mehr - wie bei den bekannten Lösungen - ein Ventilstift unter Überwindung hoher Reibungskräfte an den Dichtungen entlanggeschoben werden muß, sondern von einer Dichtung abgehoben wird. Aufgrund der in Gasfedern herrschenden hohen Drücke von 100 bar und mehr müssen die Dichtungen mit hohen Dichtkräften abdichten, was bei den bekannten Lösungen zu entsprechend hohen Betätigungskräften führt. Dadurch daß bei der erfindungsgemäßen Ausgestaltung der Ventil-Betätigungshebel verschwenkt wird, entfallen diese hohen Betätigungskräfte. Des weiteren unterliegen die Dichtungen keinem Verschleiß mehr.

Wie sich aus den Unteransprüchen ergibt, bedürfen die bekannten und weit verbreiteten längenverstellbaren Gasfedern mit einem in Längsrichtung des Gehäuses verschiebbaren Ventilstift nur einer verhältnismäßig geringen konstruktiven Abwandlung, um diese überraschenden Vorteile zu erreichen. Insbesondere führen die erfindungsgemäßen Maßnahmen dazu, daß die Betätigung des Ventils mit nur geringem Kraftaufwand mittels eines pneumatisch betätigbaren Auslösebalgs oder mechanisch möglich ist.

Weitere Merkmale, Vorteile und Einzelheiten der Erfindung ergeben sich aus der nachfolgenden Beschreibung von Ausführungsbeispielen der Erfindung. Es zeigt
- Fig. 1: eine längenverstellbare Gasfeder im Längsschnitt,
- Fig. 2: einen Teil-Längsschnitt durch die Gasfeder nach Fig. 1 in betätigter Stellung des Ventils in gegenüber Fig. 1 vergrößerter Darstellung,
- Fig. 3: einen Schnitt gemäß der Schnittlinie III-III in Fig. 2 durch die Auslöseeinrichtung der Gasfeder,
- Fig. 4: eine zweite Ausführungsform einer längenverstellbaren Gasfeder im Längsschnitt mit geschlossenem Ventil,
- Fig. 5: einen Längsschnitt durch die Gasfeder nach Fig. 4 mit geöffnetem Ventil,
- Fig. 6: eine gegenüber Fig. 4 und 5 leicht abgewandelte Gasfeder im Längsschnitt mit einer rein mechanischen Auslöseeinrichtung für das Ventil,
- Fig. 7: einen Teil-Längsschnitt durch eine abgewandelte Ausführungsform einer Gasfeder in durch Zug betätigter Stellung des Ventils und
- Fig. 8: einen Teil-Längsschnitt durch die Gasfeder nach Fig. 7 in durch Druck betätigter Stellung des Ventils.

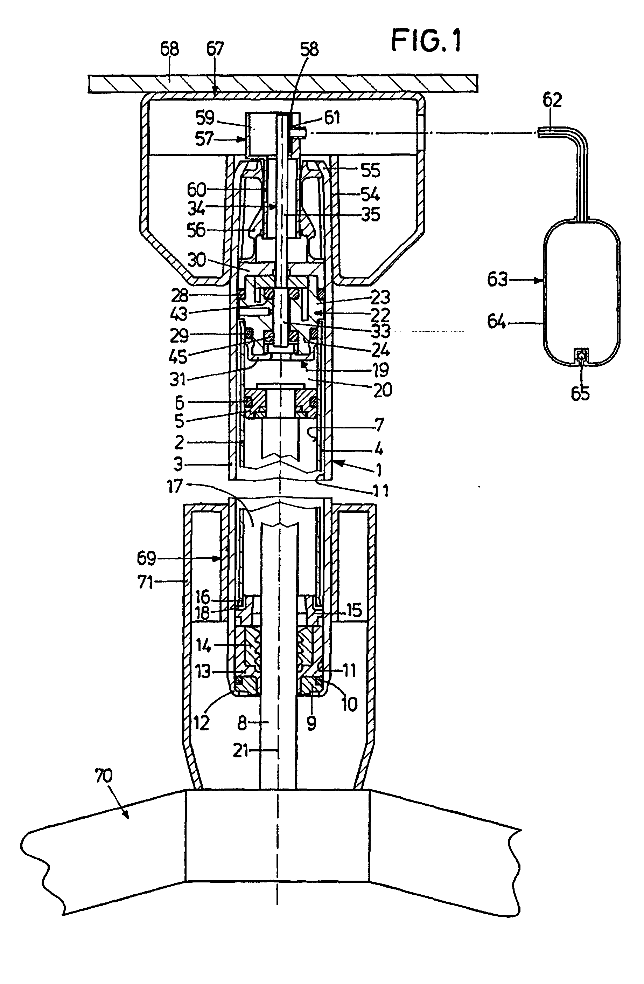

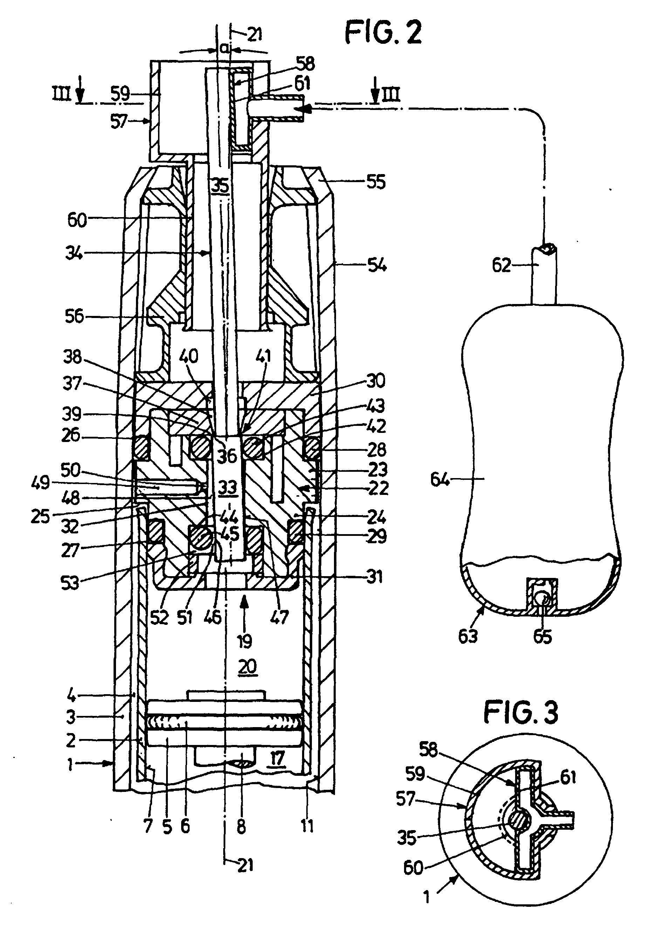

Die in Fig. 1 und 2 dargestellte längenverstellbare Gasfeder weist ein Gehäuse 1 auf, das im wesentlichen aus zwei konzentrisch ineinander gelagerten Rohren mit unterschiedlichem Durchmesser, nämlich einem Innenzylinder 2 und einem Außenzylinder 3 besteht. Zwischen dem Außenzylinder 3 und dem Innenzylinder 2 ist aufgrund des unterschiedlichen Durchmessers von Innenzylinder 2 und Außenzylinder 3 ein Ringraum 4 gebildet.

In dem Innenzylinder 2 ist ein etwa ringförmiger Kolben 5 axial verschiebbar angeordnet, der über einen Dichtungsring 6 gasdicht mit seinem Außenumfang gegenüber der Innenwand 7 des Innenzylinders 2 abgedichtet ist. Der Kolben 5 ist an einem Ende einer koaxial zum Gehäuse 1 geführten Kolbenstange 8 befestigt. Diese Kolbenstange 8 ist aus einem Ende des Gehäuses 1 herausgeführt. An diesem Ende ist das Gehäuse 1 durch einen Abschlußring 9 verschlossen, der an seinem Außenumfang mittels einer Ringdichtung 10 gegenüber der Innenwand 11 des Außenzylinders 3 gasdicht abgedichtet ist. Der Abschlußring 9 ist durch Umbördelung 12 des Außenzylinders 3 axial nach außen gehalten. Auf der Innenseite liegt gegen den Abschlußring 9 eine topfförmige Hülse 13 an, die eine Mehrfach-Lippen-Dichtung 14 aufnimmt, die mit ihren Lippen dichtend gegen die Kolbenstange 8 anliegt. Dadurch wird ein Gasaustritt entlang der Oberfläche der Kolbenstange 8 nach außen unterbunden.

Gegen die Hülse 13 stützt sich vom Innenraum des Gehäuses 1 her ein an der Innenwand 11 des Außenzylinders 3 anliegendes Zentrierstück 15 ab, das mit Rippen 16 versehen ist, auf denen der Innenzylinder 2 mit seiner Innenwand 7 radial abgestützt, also zentriert ist. Auf diesen Rippen 16 ist der Innenzylinder 2 auch axial fest abgestützt, also axial einseitig festgelegt. Dadurch daß nur Rippen 16 zur Zentrierung und axialen Abstützung des Innenzylinders 2 vorgesehen sind, ist in diesem Bereich der Ringraum 4 mit dem Teil-Gehäuseraum 17 im Innenzylinder 2 verbunden, der zwischen dem Kolben 5, dem kolbenstangenaustrittsseitigen Ende des Gehäuses 1 und der Innenwand 7 des Innenzylinders 2 begrenzt wird. Zwischen den Rippen 16 sind also Überströmkanäle 18 zwischen dem Teil-Gehäuseraum 17 und dem Ringraum 4 gebildet.

An dem dem Kolbenstangenaustritt entgegengesetzten Ende des Gehäuses 1 ist ein Ventil 19 angeordnet, mittels dessen der im Innenzylinder 2 zwischen dem Kolben 5 und dem Ventil 19 befindliche Teil-Gehäuseraum 20 mit dem Ringraum 4 und damit dem anderen Teil-Gehäuseraum 17 verbunden bzw. von diesem getrennt werden kann.

Die gesamte Gasfeder einschließlich des Ventils 19 ist im wesentlichen symmetrisch zur Mittel-Längs-Achse 21 aufgebaut. Das Ventil 19 weist einen Ventilkörper 22 auf, der aus einem äußeren Abschnitt 23 und einem inneren Abschnitt 24 gebildet ist. Der äußere Abschnitt 23 liegt gegen die Innenwand 11 des Außenzylinders 3 an, wodurch der Ventilkörper 22 relativ zum Außenzylinder 3 zentriert wird. Der ebenfalls zylindrische Abschnitt 24 geringeren Durchmessers liegt gegen die Innenwand 7 des Innenzylinders 2 an, wodurch eine Zentrierung zwischen Ventilkörper 22 und Innenzylinder 2 und damit auch zwischen Innenzylinder 2 und Außenzylinder 3 erfolgt. Im Übergangsbereich vom Abschnitt 23 zum Abschnitt 24 ist ein Anschlagbund 25 ausgebildet, mittels dessen der Ventilkörper 22 in axialer Richtung gegen den Innenzylinder 2 anliegt. Im Bereich des Abschnitts 23 einerseits und des Abschnitts 24 andererseits sind in entsprechenden Ringnuten 26, 27 Ringdichtungen 28, 29 angeordnet, mittels derer jeweils eine gasdichte Verbindung zwischen dem Abschnitt 23 und der Innenwand 11 des Außenzylinders 3 einerseits und zwischen dem inneren Abschnitt 24 und der Innenwand 7 des Innenzylinders 2 andererseits erreicht wird. Die dem äußeren Abschnitt 23 zugeordnete Ringnut 26 wird durch einen auf den äußeren Abschnitt 23 aufgesetzten topfförmigen äußeren Deckel 30 des Ventilkörpers 22 begrenzt. Die dem inneren Abschnitt 24 zugeordnete Ringnut 27 wird durch einen auf dem inneren Abschnitt 24 angebrachten, dem Teil-Gehäuseraum 20 zugewandten inneren Deckel 31 des Ventilkörpers 22 begrenzt. Der Ventilkörper 22 und die Deckel 30, 31 bestehen in der Regel aus einem geeigneten Kunststoff und sind durch Kleben oder Ultraschallschweißung miteinander verbunden.

Der Ventilkörper 22 ist konzentrisch zur Achse 21 mit einer zylindrischen Ausnehmung 32 versehen, in der ein ebenfalls zylindrisch ausgebildeter innerer Arm 33 eines doppelarmig ausgebildeten Ventil-Betätigungshebels 34 angeordnet ist, dessen anderer äußerer Arm 35 im wesentlichen außerhalb des Ventilkörpers 22 angeordnet ist. Der Betätigungshebel 34 ist mittels eines zwischen dem inneren Arm 33 mit einem größeren Durchmesser und dem äußeren Arm 35 mit einem kleineren Durchmesser ausgebildeten Ringbundes 36 gegen ein Widerlager 37 abgestützt, das durch eine in den Ventilkörper 22 eingelegte und den äußeren Deckel 30 gehaltene Ringscheibe gebildet ist, die zweckmäßigerweise aus Metall besteht. Sie weist eine zur Achse 21 konzentrische Öffnung 38 auf, die sich nach außen, also zum äußeren Arm 35 hin erweitert. Sie weist also auf ihrer dem inneren Arm 33 des Betätigungshebels 34 zugewandten Seite einen Lagerbund 39 auf, gegen den sich der Ringbund 36 des Betätigungshebels 34 abstützt. Der äußere Deckel 30 weist ebenfalls konzentrisch zur Achse 21 eine Durchgangsöffnung 40 für den äußeren Arm 35 auf, die einen größeren Durchmesser aufweist als der äußere Arm 35, so daß der in seiner Ruhelage konzentrisch zur Achse 21 verlaufende Betätigungshebel 34 um das durch den Lagerbund 39 und den Ringbund 36 gebildete Schwenklager 41 gegenüber der Achse 21 verschwenkt werden kann, wie es in Fig. 2 angedeutet ist.

Im äußeren Abschnitt 23 des Ventilkörpers 22 ist eine durch das Widerlager 37 begrenzte Ringnut 42 ausgebildet, in der eine gegen den inneren Arm 33 des Betätigungshebels 34 dichtend anliegende Ringdichtung 43 angeordnet ist. Diese Ringdichtung 43 ist also unmittelbar benachbart zum Schwenklager 41 angeordnet. Auch bei Verschwenkungen des Betätigungshebels-34 dichtet sie stets die zylindrische Ausnehmung 32 nach außen hin ab, verhindert also einen Austritt von Druckgas aus dem Gehäuse 1 nach außen. In dem dem Teil-Gehäuseraum 20 zugewandten Bereich des inneren Abschnitts 24 des Ventilkörpers 22 ist in einer Erweiterung 44 der zylindrischen Ausnehmung 32 eine Ringdichtung 45 angeordnet, die in der in Fig. 1 dargestellten Ruhelage des Betätigungshebels 43, in der dieser konzentrisch zur Achse 21 angeordnet ist, dichtend gegen den inneren Arm 33 des Betätigungshebels 34 anliegt, wobei die Fläche, mit der der innere Arm 33 gegen diese Ringdichtung 45 anliegt, eine Ventil-Sitzfläche 46 bildet.

Bei der in Fig. 2 dargestellten maximalen Verschwenkung des Betätigungshebels 34 um das Schwenklager 41 kommt der innere Arm 33 unmittelbar benachbart zur Ringdichtung 45 zur Anlage gegen die Wand der zylindrischen Ausnehmung 32, wo also insoweit ein Anschlag 47 gebildet wird. Wie insbesondere Fig. 2 erkennen läßt, ist die zylindrische Ausnehmung 32 weiter als der innere Arm 33 des Betätigungshebels 34, wodurch die geschilderte Verschwenkbarkeit ermöglicht wird und wodurch zwischen der Wand dieser zylindrischen Ausnehmung 32 und dem inneren Arm 33 des Betätigungshebels 34 ein Kanal 48 gebildet wird, in den ein im äußeren Abschnitt 23 ausgebildeter, etwa radial verlaufender Überströmkanal 49 einmündet, der den Ringraum 4 mit dem Kanal 48 verbindet, und der mit einer Drosselstelle 50 versehen ist.

Die Ringdichtung 45 ist derart dimensioniert, daß beim Verschwenken des Betätigungshebels 34 bis gegen den Anschlag 47 die Ventil-Sitzfläche 46 des inneren Arms 33 auf der dem Anschlag 47 diametral gegenüberliegenden Seite von der Ringdichtung 45 so weit abhebt, daß dort ein sehr kleiner Spalt 51 gebildet wird, durch den Druckgas aus dem Teil-Gehäuseraum 20 durch die Erweiterung 44, den Spalt 51, den Kanal 48, den Überströmkanal 49, den Ringraum 4 und die Überströmkanäle 18 in den Teil-Gehäuseraum 17 oder umgekehrt strömen kann. Wenn dagegen der Betätigungshebel 34 sich in seiner Ruhelage befindet, dann liegt die Ringdichtung 45 rundum dichtend gegen die Ventil-Sitzfläche 46 an, so daß also kein Spalt 51 gebildet ist. Beim Öffnen des Ventils 19 in der geschilderten Weise wird die Ringdichtung 45 auf der dem Anschlag 47 benachbarten Seite radial zur Achse 21 relativ stark zusammengedrückt; damit diese radiale Zusammendrückung durch eine entsprechende Ausdehnung parallel zur Achse 21 kompensiert werden kann, ist ein mit dem inneren Deckel 31 fest verbundener, die Ringdichtung 45 in der Erweiterung 44 haltender Ringsteg 52 vorgesehen, der - wie in Fig. 2 links erkennbar ist - in der Ruhelage des Betätigungshebels 34 Spiel 53 in Richtung der Achse 21 zur Ringdichtung 45 hat. Im Bereich dieses Spiels 53 kann sich - wie in Fig. 2 rechts dargestellt ist - die Ringdichtung 45 beim Öffnen des Ventils 19 parallel zur Achse 21 verformen.

Die Verschwenkbewegung des Betätigungshebels 34 um das Schwenklager 41 liegt im Bereich eines Schwenkwinkels a von 2 bis 3°.

Das Gehäuse 1 weist in seinem in der Zeichnung oberen, dem Austritt der Kolbenstange 8 entgegengesetzten Bereich einen konisch verjüngten Befestigungsabschnitt 54 auf, dessen Rand 55 nach innen zur Achse 21 hin eingezogen ist. Dieser Rand 55 bildet somit einen Anschlag für eine Distanzhülse 56, gegen die sich wiederum der Ventilkörper 22 in Richtung der Achse 21 abstützt. In der Distanzhülse 56 ist eine Auslöseeinrichtung 57 für den Ventil-Betätigungshebel 34 angebracht. Diese weist einen fluidisch, und zwar insbesondere pneumatisch, betätigbaren Auslösebalg 58 auf, der in einer Kammer 59 ausgebildet ist, die wiederum mittels eines Haltestutzens 60 in der Distanzhülse 56 gehalten ist. Wie insbesondere Fig. 3 entnehmbar ist, weist der Auslösebalg 58 eine Membran 61 auf, die gegen den aus dem Gehäuse 1 nach oben herausgeführten äußeren Arm 35 des Betätigungshebels 34 anliegt. Die durch die Membran 61 begrenzte Kammer 59 ist über einen Schlauch 62 an eine Betätigungseinrichtung 63 angeschlossen, die durch einen Betätigungsbalg 64 gebildet ist. Dieser weist ein als Rückschlagventil ausgebildetes Füllventil 65 auf, das bei Unterdruck im Betätigungsbalg 64, dem Schlauch 62 und dem Auslösebalg 58 gegenüber Atmosphärendruck öffnet und Luft eintreten läßt. Bei einem Zusammendrücken des Betätigungsbalgs 64 und dem dadurch erzeugten Überdruck im Betätigungsbalg 64, Schlauch 62 und Auslösebalg 58 schließt das Füllventil 65. Der Betätigungsbalg 64 besteht aus elastischem Material, wie beispielsweise Gummi und nimmt in seiner in Fig. 1 dargestellten Ruhelage eine beispielsweise im wesentlichen zylindrische Form ein. Wenn der Betätigungsbalg 64 entsprechend der Darstellung in Fig. 2 zusammen-gedrückt wird, wird Luft durch den Schlauch 62 in die Kammer 59 gedrückt, wodurch die Membran 61 verformt wird und den Betätigungshebel 34 in der geschilderten Weise verschwenkt. Die Kammer 59 wird zwischen der Membran 61 und einer ortsfesten Wand 66 der Auslöseeinrichtung 57 begrenzt. Die Auslöseeinrichtung 57 kann von oben als Aufsteckteil in die Distanzhülse 56 eingeschoben werden. Der Auslösebalg 58 kann auch direkt in dem Befestigungsabschnitt 54 angeordnet werden und sich direkt oder indirekt gegenüber dessen Innenwand abstützen.

Die längenverstellbare zumindest teilweise mit Druckgas gefüllte Gasfeder wird in allgemein üblicher Weise derart eingesetzt, daß der konisch verjüngte Befestigungsabschnitt 54 in einer entsprechenden Halteeinrichtung 67 an der Unterseite des Sitzes 68 eines Stuhles durch Konusklemmung befestigt wird und daß ansonsten das Gehäuse 1 der Gasfeder in einer Führungsbüchse 69 eines mit einem Fußgestell 70 eines Stuhles verbundenen Standrohres 71 in Richtung der Achse 21 verschiebbar, quer dazu aber geführt angeordnet wird. Die Kolbenstange 8 wird an einem Boden eines solchen Standrohres 71 drehbar befestigt. Diese Ausgestaltung ist ganz allgemeine Praxis.

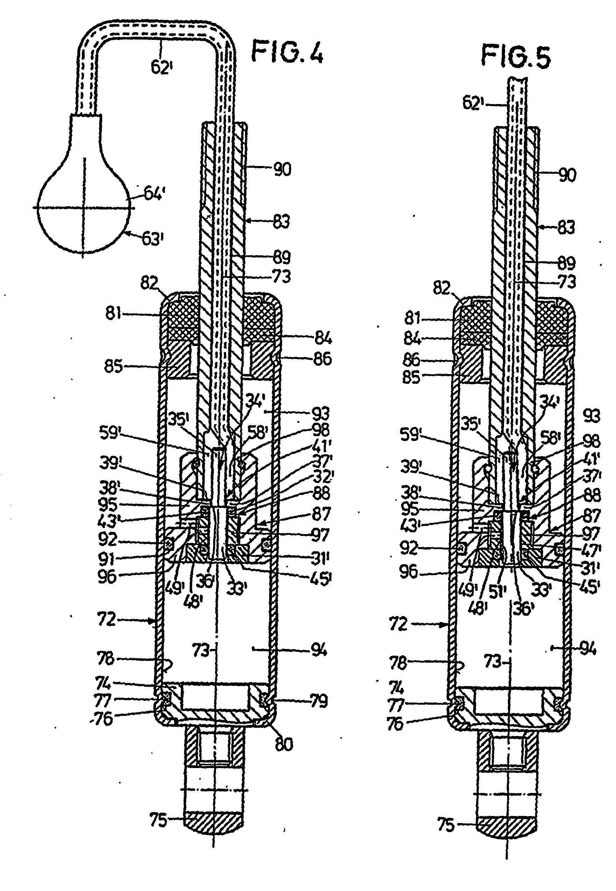

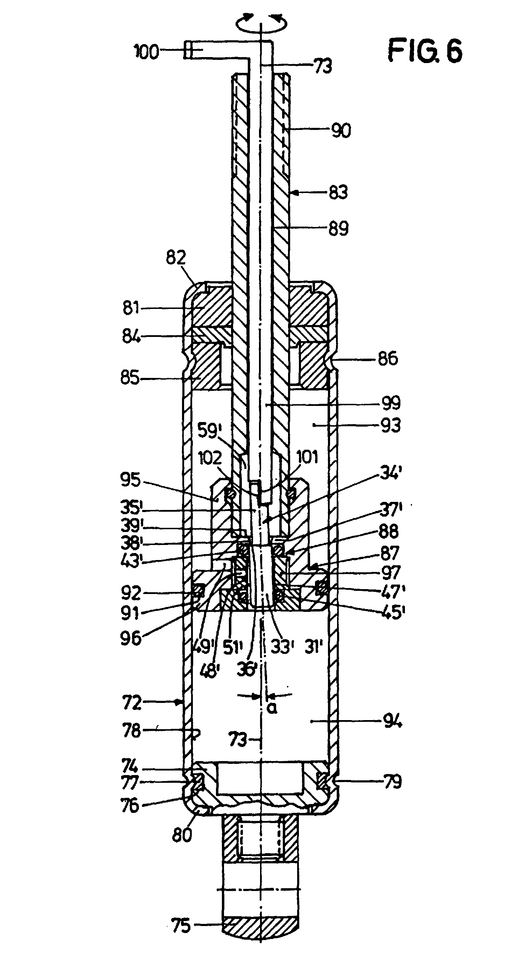

In Fig. 4 und 5 ist eine andere Ausführungsform einer längenverstellbaren Gasfeder dargestellt. Sie weist ein zylindrisches, beispielsweise aus einem Stahlrohr gebildetes Gehäuse 72 mit einer Mittel-Längs-Achse 73 auf. An einem Ende ist das Gehäuse 72 mittels eines Verschlußstopfens 74 verschlossen, an dem als Befestigungseinrichtung 75 ein sogenanntes Auge angebracht ist. Der Verschlußstopfen 74 weist in seinem Umfang eine Nut 76 auf, in der eine Ringdichtung 77 angeordnet ist, die gegen die Innenwand 78 des Gehäuses 72 dichtend anliegt. Der Verschlußstopfen 74 ist dadurch in Richtung der Achse 73 relativ zum Gehäuse 72 festgelegt, daß dieses eine gegen die Dichtung 77 und in die Nut 76 eingedrückte Sicke 79 aufweist. Außerdem ist das zugeordnete Ende des Gehäuses 72 mit einer den Verschlußstopfen 74 außen umgebenden Umbördelung 80 versehen.

Am anderen Ende ist das Gehäuse 72 mit einer konzentrisch zur Achse 73 angeordneten Führungsbüchse 81 versehen, die an ihrer Außenseite ebenfalls von einer Umbördelung 82 des Gehäuses 72 übergriffen wird. In der Führungsbüchse 81 ist eine konzentrisch zur Achse 73 angeordnete, aus dem Gehäuse 72 herausgeführte Kolbenstange 83 in ihrer Längsrichtung verschiebbar geführt. Gegen die Führungsbüchse 81 stützt sich eine ringscheibenförmige Dichtung 84 ab, die einerseits dichtend gegen die Innenwand 78 des Gehäuses 72 und andererseits gegen die Kolbenstange 83 anliegt. Die Dichtung 84 wiederum wird durch einen Haltering 85 axial zum Inneren des Gehäuses 72 hin gehalten, der mittels einer in das Gehäuse 72 gedrückten Sicke 86 oder über den Umfang verteilter noppenförmiger Eindrückungen axial festgelegt wird. Durch die geschilderten Maßnahmen ist das Gehäuse 72 an seinen beiden Enden gas- und flüssigkeitsdicht geschlossen.

An dem im Gehäuse 72 befindlichen Ende der Kolbenstange 83 ist ein Kolben 87 mit einem integrierten Ventil 88 angebracht. Die Betätigung des Ventils 88 von außen erfolgt durch eine Bohrung 89 in der Kolbenstange 83, die konzentrisch zur Achse 73 verläuft. Am äußeren Ende der Kolbenstange ist ein Außengewinde 90 ausgebildet, an dem eine nicht dargestellte Befestigungseinrichtung angebracht werden kann.

Der Kolben 87 ist auf seiner Außenseite mit einer Nut 91 versehen, in der eine Ringdichtung 92 angeordnet ist, die dichtend gegen die Innenwand 78 des Gehäuses 72 anliegt. Sie teilt den Innenraum des Gehäuses 72 in zwei Teil-Gehäuseräume 93 und 94. Er weist einen im wesentlichen zylindrischen Ventilkörper 95 auf, der mit der Kolbenstange 83 verbunden ist. Der Ventil-Körper 95 weist einen Ringbund 96 auf, der zur Führung an der Innenwand 78 des Gehäuses 72 und als Aufnahme für die Ringdichtung 92 dient.

Das Ventil 88 weist einen ähnlichen Aufbau und identische Funktionen wie das Ventil 19 des Ausführungsbeispiels nach den Fig. 1 und 2 auf. Für konstruktiv anders ausgebildete, funktionell aber gleichwertige Teile werden daher nachfolgend dieselben Bezugsziffern wie bei dem Ausführungsbeispiel nach den Fig. 1 und 2 verwendet, jedoch mit einem hochgesetzten Strich versehen. Im Ventilkörper 95 ist konzentrisch zur Mittel-Längs-Achse 73 eine im wesentlichen zylindrische Ausnehmung 32' vorgesehen, die in Richtung zur Kolbenstange 83 hin durch ein einstückig mit dem Ventilkörper 95 ausgebildetes ringscheibenförmiges Widerlager 37' begrenzt wird, das eine sich zur Kolbenstange 83 hin erweiternde Öffnung 38' aufweist, wodurch ein Lagerbund 39' gebildet wird. Benachbart zu diesem Widerlager 37' weist die Kolbenstange eine als noch zu erläuternde Kammer 59' dienende Erweiterung der Bohrung 89 auf. In der Ausnehmung 32' und der Kammer 59' sind jeweils der innere Arm 33' bzw. der äußere Arm 35' eines Ventil-Betätigungshebels 34' angeordnet, wobei ein Ringbund 36' zwischen dem einen größeren Durchmesser aufweisenden inneren Arm 33' und dem einen kleineren Durchmesser aufweisenden äußeren Arm 35' zusammen mit dem Lagerbund 39' ein Schwenklager 41' gebildet ist. Unmittelbar benachbart zu dem Widerlager 37' ist in der Ausnehmung 32' eine Ringdichtung 43' angeordnet. Benachbart zum Teil-Gehäuse-raum 94, also benachbart zum dem Schwenklager 41' entfernten Ende des inneren Arms 33' des Betätigungshebels 34' ist eine weitere Ringdichtung 45' vorgesehen. Aus montagetechnischen Gründen ist zwischen den beiden Ringdichtungen 43' und 45' eine Abstandshülse 97 zur jeweils einseitigen Fixierung der Ringdichtungen 43' und 45' vorgesehen. Im Ventilkörper 95 ist ein den Teil-Gehäuseraum 93 mit einem den inneren Arm 33' umgebenden Kanal 48' verbindender Überströmkanal 49' ausgebildet, der ebenfalls eine Drosselstelle aufweisen kann. Die Ringdichtung 45' wird durch einen inneren ringscheibenförmigen Deckel 31' gehalten, der am Ventilkörper 95 befestigt ist. Beim Verschwenken des Betätigungshebels 34' aus der mit der Achse 73 fluchtenden Ruhelage in die in Fig. 5 dargestellte verschwenkte Lage kommt der innere Arm 33' zur Anlage an einem am Deckel 31' oder der Abstandshülse 97 ausgebildeten Anschlag 47', wobei die gegenüberliegende Ventil-Sitzfläche 46' von der Ringdichtung 45' unter Bildung eines Spalts 51' abhebt, wodurch die Teil-Gehäuseräume 93 und 94 miteinander verbunden werden.

Als Auslöseeinrichtung 57' ist in der Kammer 59', die in dem die Kolbenstange 83 aufnehmenden Bereich des Verntilkörpers 95 ausgebildet ist, ein Auslösebalg 58' angeordnet, der sich gegen die in der Kolbenstange 83 ausgebildete Wand 98 der Kammer 59' abstützt und der andererseits gegen den äußeren Arm 35' des Betätigungshebels 34 anliegt. Der Auslösebalg 58' ist über einen Schlauch 62', der gleichermaßen wie beim Ausführungsbeispiel nach den Fig. 1 und 2 im wesentlichen unelastisch aber biegsam ist, mit einer durch einen Betätigungsbalg 64' gebildeten Betätigungseinrichtung 63' verbunden. Beim Zusammendrücken des Betätigungsbalges 64' wird Fluid in den Auslösebalg 58' gedrückt und weitet diesen auf, so daß er den Betätigungshebel 34' aus der in Fig. 4 dargestellten Ruhelage in die in Fig. 5 dargestellte Lage verschwenkt, in der das Ventil 88 geöffnet ist, so daß aus einem der Teil-Gehäuseräume 93 bzw. 94 Fluid, d.h. Druckgas oder Flüssigkeit, in den anderen Teil-Gehäuseraum 94 bzw. 93 strömen kann.

Wie dem mit dem Ausführungsbeispiel nach den Fig. 4 und 5 weitestgehend identischen Ausführungsbeispiel nach Fig. 6 entnehmbar ist, kann die Betätigung des Ventils 88 auch rein mechanisch erfolgen. Hierzu ist in der Bohrung 89 der Kolbenstange 83 eine um die Achse 73 schwenkbare Betätigungsstange 99 angeordnet, die an ihrem aus der Kolbenstange 83 herausragenden Ende einen Schwenk-Betätigungsgriff 100 aufweist.

An ihrem in der Kammer 59' liegenden Ende greifen die Betätigungsstange 99 und der äußere Arm 35' mit zwei einander angepaßten, wie ein Exzenter wirkenden Betätigungsflächen 101 und 102 aneinander, so daß bei einem Verschwenken der Betätigungsstange 99 mittels des Betätigungsgriffs 100 um die Achse 73 die Betätigungsfläche 101 der Betätigungsstange 99 die Betätigungsfläche 102 des äußeren Arms 35' quer zur Achse 73 verschiebt, wodurch die geschilderte Schwenkbewegung des Betätigungshebels 34' bewirkt wird.

Die Betätigungsflächen zwischen der Betätigungsstange und dem äußeren Arm des Betätigungshebels können auch so, beispielsweise als Schrägflächen, ausgebildet sein, daß die Schwenkbewegung des Betätigungshebels bei einer Verschiebung der Betätigungsstange in Richtung der Achse bewirkt wird.

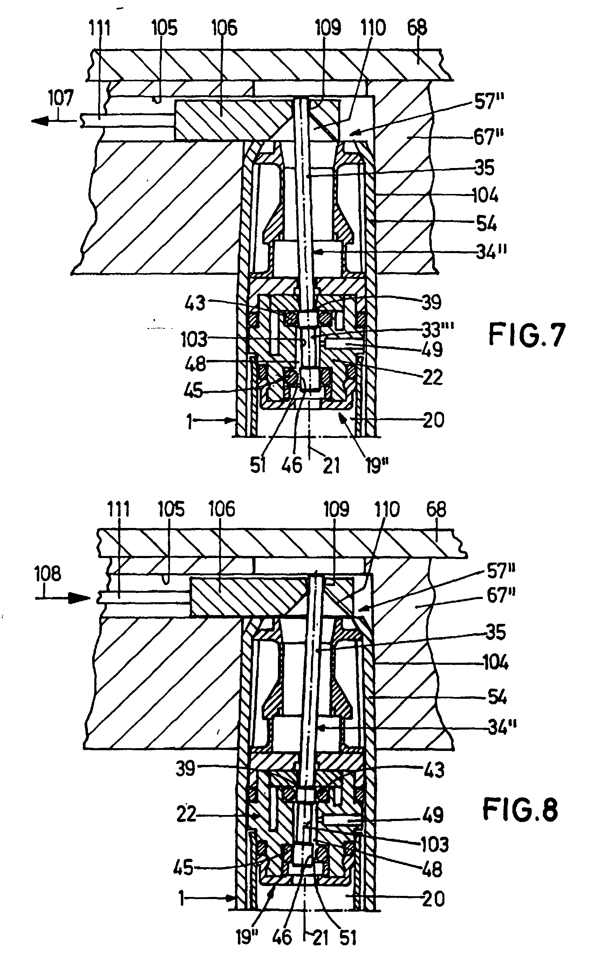

Soweit bei dem Ausführungsbeispiel nach den Fig. 7 und 8 mit dem Ausführungsbeispiel nach den Fig. 1 und 2 identische Teile vorgesehen sind, werden diese mit denselben Bezugsziffern versehen, ohne daß es einer erneuten Beschreibung bedarf. Soweit Teile konstruktiv unterschiedlich aber funktionell identisch sind, werden dieselben Bezugsziffern wie in den Fig. 1 und 2, jedoch mit einem hochgesetzten Doppelstrich verwendet.

Bei dem Ausführungsbeispiel nach den Fig. 7 und 8 weist der Ventil-Betätigungshebel 34" des Ventils 19" einen inneren Arm 33''' auf, der im Bereich zwischen den Ringdichtungen 43 und 45 eine Einschnürung 103 aufweist, so daß beim Verschwenken des Ventil-Betätigungshebels 34" der Kanal 48 immer einen ausreichend großen freien Querschnitt aufweist.

In der Halteeinrichtung 67" ist oberhalb einer den Befestigungsabschnitt 54 des Gehäuses 1 aufnehmenden Ausnehmung 104 eine quer zur Achse 21 verlaufende Aufnahme 105 ausgebildet, in der ein Schieber 106 in Richtung der Pfeile 107 bzw. 108 verschiebbar angeordnet ist. Der Schieber 106 weist eine Bohrung 109 zur Aufnahme des zugeordneten Endes des Ventil-Betätigungshebels 34" auf, die wiederum mit einem sich zur Ausnehmung 104 hin trichterförmig erweiterten Einführöffnung 110 versehen ist. Am Schieber 106 ist ein Betätigungselement 111 angebracht, mittels dessen der Schieber 106 in der Aufnahme 105 quer zur Achse 21 verschoben werden kann. Entsprechend der Darstellung in Fig. 7 kann hierbei durch Zug entsprechend dem Pfeil 107 oder entsprechend dem Pfeil 108 in Fig. 8 durch Druck die oben zu den Fig. 1 und 2 bereits geschilderte Verschwenkung des Ventil-Betätigungshebels 34" bewirkt werden. Das Betätigungselement 111 kann beispielsweise durch einen Bowdenzug oder durch eine Stange gebildet sein. Der in der Aufnahme 105 geführte Schieber 106 bildet zusammen mit dem Betätigungselement 111 eine Auslöseeinrichtung 57".

## Patentansprüche

1. Längenverstellbare Gasfeder
mit einem Gehäuse (1, 72) mit einer Mittel-Längs-Achse (21, 73),
mit einer aus dem Gehäuse (1, 72) konzentrisch zur Mittel-Längs-Achse (21, 73) herausgeführten Kolbenstange (8, 83),
mit einem an der Kolbenstange (8, 83) angebrachten, im Gehäuse (1, 72) verschiebbaren, das Gehäuse (1, 72) in zwei Teil-Gehäuseräume (17, 20; 93, 94) aufteilenden Kolben (5, 87),
mit einem Ventil (19, 88, 19'') zum Verbinden der Teil-Gehäuseräume (17, 20; 93, 94) miteinander,
**dadurch gekennzeichnet,**
**daß** das Ventil (19, 88, 19") einen Ventil-Betätigungshebel (34, 34', 34") aufweist, der quer zu seiner Längsrichtung schwenkbar gelagert und durch Verschwenken aus einer Ruhelage in eine Öffnungslage des Ventils (19, 88, 19") mit einer Ventil-Sitzfläche (46, 46') von einer Dichtung (45, 45') unter Bildung eines die Teil-Gehäuseräume (17, 20; 93, 94) verbindenden Spaltes (51, 51') abhebbar ist.

2. Gasfeder nach Anspruch 1, **dadurch gekennzeichnet daß** der Ventil-Betätigungshebel (34, 34', 34") sich in Richtung der Mittel-Längs-Achse (21, 73) erstreckt.

3. Gasfeder nach Anspruch 1 oder 2, **dadurch gekennzeichnet, daß** der Ventil-Betätigungshebel (34, 34', 34") als zweiarmiger Hebel ausgebildet ist, der einen Arm (33, 33', 33") mit der Ventil-Sitzfläche (46, 46') und einen Arm (35, 35') aufweist, an dem eine Auslöseeinrichtung (57, 57', 57") angreift.

4. Gasfeder nach einem der Ansprüche 1 bis 3, **dadurch gekennzeichnet, daß** der Ventil-Betätigungshebel (34, 34', 34") in einem Schwenklager (41, 41') gelagert ist.

5. Gasfeder nach Anspruch 4, **dadurch gekennzeichnet, daß** unmittelbar benachbart zum Schwenklager (41, 41') am Ventil-Betätigungshebel (34, 34', 34") eine Dichtung (43, 43') vorgesehen ist.

6. Gasfeder nach einem der Ansprüche 1 bis 5, **dadurch gekennzeichnet, daß** die Auslöseeinrichtung (57, 57') einen fluidisch dehnbaren Auslösebalg (58, 58') aufweist, der über einen Schlauch (62, 62') mit einer Betätigungseinrichtung (63, 63') verbunden ist.

7. Gasfeder nach einem der Ansprüche 1 bis 5, **dadurch gekennzeichnet. daß** die Auslöseeinrichtung (57, 57') durch eine Betätigungsstange (99) gebildet wird, die mit dem Ventil-Betätigungshebel (34') über Betätigungsflächen (101, 102) gekoppelt ist.

8. Gasfeder nach einem der Ansprüche 1 bis 7, **dadurch gekennzeichnet daß** das Ventil (19, 19") an dem dem Austritt der Kolbenstange (8) entgegengesetzten Ende des Gehäuses (1) angeordnet ist.

9. Gasfeder nach einem der Ansprüche 1 bis 7, **dadurch gekennzeichnet, daß** das Ventil (88) im Kolben (87) ausgebildet ist.

10. Gasfeder nach einem der Ansprüche 1 bis 5, **dadurch gekennzeichnet daß** die Auslöseeinrichtung (57") durch ein am Ventil-Betätigungshebel (34") angreifendes mechanisches auf Zug oder Druck wirkendes Betätigungsglied gebildet ist.

## Claims

1. An adjustable-length gas spring comprising
a housing (1, 72) having a central longitudinal axis (21, 73),
a piston rod (8, 83) led out of the housing (1, 72) concentrically of the central longitudinal axis (21, 73),
a piston (5, 87) arranged on the piston rod (8, 83) and displaceable in the housing (1, 72) and dividing the housing (1, 72) into two partial housing chambers (17, 20; 93, 94),
a valve (19, 88, 19") for the partial housing chambers (17, 20; 93, 94) to be connected with each other,
**characterized in**
**that** the valve (19, 88, 19") has a valve-operating lever (34, 34', 34"), which is arranged pivotably at right angles to its longitudinal direction, and a valve seat (46, 46') of which, when the lever (34, 34', 34") is pivoted out of a position of rest into a position of opening of the valve (19, 88, 19"), can be lifted off a seal (45, 45'), while forming a gap (51, 51') that connects the partial housing chambers (17, 20; 93, 94) with each other.

2. A gas spring according to claim 1, **characterized in that** the valve-operating lever (34, 34', 34") extends in the direction of the central longitudinal axis (21, 73).

3. A gas spring according to claim 1 or 2, **characterized in that** the valve-operating lever (34, 34', 34") is a two-armed lever having an arm (33, 33', 33") which comprises the valve seat (46, 46') and an arm (35, 35') upon which acts a triggering device (57, 57', 57").

4. A gas spring according to one of claims 1 to 3, **characterized in that** the valve-operating lever (34, 34', 34") is lodged in a pivot bearing (41, 41').

5. A gas spring according to claim 4, **characterized in that** a seal (43, 43') is provided on the valve-operating lever (34, 34') in direct vicinity to the pivot bearing (41, 41').

6. A gas spring according to one of claims 1 to 5, **characterized in that** the triggering device (57, 57') comprises a fluidically expansible triggering bellows (58, 58'), which is connected with an actuating device (63, 63') by way of a hose (62, 62').

7. A gas spring according to one of claim 1 to 5, **characterized in that** the triggering device is formed by an actuating rod (99), which is coupled with the valve-operating lever (34') by way of actuating faces (101, 102).

8. A gas spring according to one of claims 1 to 7, **characterized in that** the valve (19, 19") is disposed at the end of the housing (1) that is opposite to the exit of the piston rod (8).

9. A gas spring according to one of claims 1 to 7, **characterized in that** the valve (88) is formed in the piston (87).

10. A gas spring according to one of claims 1 to 5, **characterized in that** the triggering device (57") is formed by a mechanical actuating member acting on the valve-operating lever (34") and working by traction or pressure.

## Revendications

1. Ressort pneumatique à longueur variable, comportant
un carter (1, 72) comprenant un axe longitudinal médian (21, 73),
une tige de piston (8, 83) menée concentriquement à l'axe longitudinal médian (21, 73) hors du carter (1, 72),
un piston (5, 87) monté sur la tige de piston (8, 83), mobile en translation dans le carter (1, 72) et subdivisant le carter (1, 72) en deux chambres de carter partielles (17, 20 ; 93, 94),
une valve (19, 88, 19") pour relier les chambres de carter partielles (17, 20 ; 93, 94) l'une à l'autre,
**caractérisé en ce que**
la valve (19, 88, 19") comprend un levier d'actionnement de valve (34, 34', 34") qui est monté avec faculté de basculer perpendiculairement à sa direction longitudinale et qui, par basculement hors d'une position de repos jusque dans une position d'ouverture de la valve (19, 88, 19"), peut être soulevé avec une surface de siège de valve (46, 46') depuis un joint d'étanchéité (45, 45') en formant un intervalle (51, 51') qui relie les chambres de carter partielles (17, 20 ; 93, 94).

2. Ressort pneumatique selon la revendication 1, **caractérisé en ce que** le levier d'actionnement de valve (34, 34', 34") s'étend en direction de l'axe longitudinal médian (21, 73).

3. Ressort pneumatique selon l'une ou l'autre des revendications 1 et 2, **caractérisé en ce que** le levier d'actionnement de valve (34, 34', 34") est réalisé sous la forme d'un levier à deux bras, dont un bras (33, 33', 33") comprend la surface de siège de valve (46, 46') et dont l'autre bras (35, 35') est attaqué par un dispositif de déclenchement (57, 57', 57").

4. Ressort pneumatique selon l'une quelconque des revendications 1 à 3, **caractérisé en ce que** le levier d'actionnement de valve (34, 34', 34") est monté dans un palier de basculement (41, 41').

5. Ressort pneumatique selon la revendication 4, **caractérisé en ce qu'**un joint d'étanchéité (43, 43') est prévu immédiatement au voisinage du palier de basculement (41, 41') sur le levier d'actionnement de valve (34, 34', 34").

6. Ressort pneumatique selon l'une quelconque des revendications 1 à 5, **caractérisé en ce que** le dispositif de déclenchement (57, 57') comprend un soufflet de déclenchement (58, 58') extensible sous action un fluide qui est relié à un dispositif d'actionnement (63, 63') via un tuyau (62, 62').

7. Ressort pneumatique selon l'une quelconque des revendications 1 à 5, **caractérisé en ce que** le dispositif de déclenchement (57, 57') est formé par une tige d'actionnement (99) qui est couplée au levier d'actionnement de valve (34') via des surfaces d'actionnement (101, 102).

8. Ressort pneumatique selon l'une quelconque des revendications 1 à 7, **caractérisé en ce que** la valve (19, 19") est agencée à l'extrémité du carter (1) opposée à la sortie de la tige de piston (8).

9. Ressort pneumatique selon l'une quelconque des revendications 1 à 7, **caractérisé en ce que** la valve (88) est réalisée dans le piston (87).

10. Ressort pneumatique selon l'une quelconque des revendications 1 à 5, **caractérisé en ce que** le dispositif de déclenchement (57") est formé par un organe d'actionnement mécanique qui attaque le levier d'actionnement de valve (34") et qui agit par traction ou par compression.
